# EUROPÄISCHE PATENTANMELDUNG

(11) **EP 1 065 474 A2**
(43) Veröffentlichungstag der Anmeldung: **03.01.2001**
(21) Anmeldenummer: 00108894.7
(22) Anmeldetag: 27.04.2000
(51) Int. Cl.: G01F 1/66

(54) **Ultraschallzähler mit Schallumlenkung**

(30) Priorität: 01.07.1999 DE 19930278
(71) Anmelder: Hydrometer GmbH, 91522 Ansbach (DE)
(72) Erfinder: Sonnenberg, Hans-Michael, 90616 Neuhof (DE)
(74) Vertreter: Matschkur, Peter

(57) **Zusammenfassung**

Ultraschallzähler zur Bestimmung des Strömungsvolumens einer strömenden Flüssigkeit durch eine Laufzeitmessung, insbesondere Differenzlaufzeitmessung, eines Ultraschallsignals, das in einer Messstrecke eines Strömungskanals zwischen zwei vorzugsweise umschaltbaren Ultraschallwandlern verläuft, die seitlich neben dem Strömungskanal der Messstrecke angeordnet sind, wobei die im Wesentlichen senkrecht zur Achse der Messstrecke eingekoppelte Ultrschall-Strahlung über Reflektoren i. w. zur Achse der Messstrecke umgelenkt wird, wobei die Reflektoren mit einer oder mehreren Strömungs-Öffnungen zum direkten Durchleiten der Flüssigkeit in die Messstrecke zwischen den Reflektoren versehen sind.

## Beschreibung

Die Erfindung bezieht sich auf einen Ultraschallzähler zur Bestimmung des Strömungsvolumens einer strömenden Flüssigkeit durch eine Laufzeitmessung, insbesondere Differenzlaufzeitmessung, eines Ultraschallsignals, das in einer Messstrecke eines Strömungskanals zwischen zwei vorzugsweise umschaltbaren Ultraschallwandlern verläuft, die seitlich neben dem Strömungskanal der Messstrecke angeordnet sind, wobei die i. w. senkrecht zur Achse der Messstrecke eingekoppelte Ultraschallstrahlung über Reflektoren i. w. senkrecht zum Strömungskanal umgelenkt wird.

Will man einen idealen Ultraschallzähler mit Differenzlaufzeitmessung aufbauen, wäre die Anordnung des schallabgebenden sowie des schallempfangenden Elements so anzuordnen, dass
a) die Schallausbreitungsrichtung parallel zur Hauptströmung verläuft,
b) die Strömung keine Ablenkung durch die Schallwandler erfährt,
c) die Schallkeule genügend große Bereiche des Strömungsquerschnitts erfasst,
d) ebene strömungsprofilunabhängige Schallwellenfronten ohne Reflexionen vorhanden sind (Kolbenprofil),
e) der Schallpegel außerhalb des zu messenden Mediums gleich null und
f) Schallmoden höherer Ordnung gleich null sind.

Die Forderungen a) - c) hätten aber zur Folge, dass durch die Ebene der Schallwandler ungehindert das Medium durchströmen kann.

Die Forderungen d) - f) sind mit realen Bauelementen von Schallwandler und Messrohr nie zu erreichen, da diese Forderung theoretische Randbedingungen beschreiben (z. B. ideal schallharte Messstrecke, Kolbenschwinger ohne Radialmoden, etc.).

Im praktischen Aufbau eines Ultraschallzählers weicht man deutlich von der Idealform ab, indem man entweder die Schall-Laufrichtung nicht parallel zur Strömung ausrichtet, oder Strömungsführungselemente benutzt, die die Strömung um den Schallwandler leitet.

In beiden Fällen kommt es durch Strömungsprofiländerungen und Wirbelbildungen zu Änderungen des Differenzlaufzeitverhaltens.

Ultraschallzähler die keine zur Strömungsrichtung parallele Schallführung besitzen, haben immer das Problem nur Teilbereiche des Strömungsquerschnittes zu erfassen und sind nicht strömungsprofilunabhängig. Turbulenzen können zum Teil erhebliche Messfehler verursachen.

Betrachtet man die Ultraschallzähler mit Strömungsumlenkung und direkt gegenüberliegende Schallwandlungselemente so ergibt sich Folgendes:

Innerhalb eines definierten Messabschnittes erfüllt dieser Zähler annähernd die Idealbedingungen. Schallrichtung ist parallel zur Strömungsrichtung und Schallwelle kann grundsätzlich den gesamten Rohrquerschnitt erfassen. Im Ein- und Auslaufbereich entstehen aber Querströmungen und Wirbel die nicht mehr parallel zur Schallwellenausbreitung strömen. Diese Störungen können eine Verfälschung des Schallsignals erzeugen und das Reziprozitätsprinzip wird durch das unterschiedliche Strömungsverhalten von Ein- und Auslassbereich verletzt. Außerdem entsteht durch die Umlenkung ein hoher Strömungswiderstand, der die Messdynamik stark eingrenzt.

Verbesserungen kann man erreichen, indem nicht die Schallwandler sich gegenüberstehen, sondern Reflexionselemente eingesetzt werden, die den Schall üblicherweise im 90°-Winkel auf parallel zur Strömung stehende Wandler umlenkt. Aber auch hier entsteht durch das schräg stehende Reflexionselement eine Störung des Strömungsprofils. Insbesondere durch die Anhaftung der Strömung am Reflexionselement durch den Coanda-Effekt mit schwer beherrschbarem Wirbelabriss im Umschlagpunkt von laminar zu turbulenter Strömung lässt sich eine zuverlässige reproduzierbare Strömungsführung nicht erreichen.

Der Erfindung liegt daher die Aufgabe zugrunde, einen Ultraschallzähler der eingangs genannten Art so auszugestalten, dass eine höhere Messgenauigkeit erreicht wird.

Zur Lösung dieser Aufgabe ist erfindungsgemäß vorgesehen, dass die Reflektoren mit Strömungsöffnungen zum direkten Durchleiten der Flüssigkeit in die Messstrecke zwischen den Reflektoren versehen sind. Um die Schallverluste, welche durch die Strömungsöffnungen entstehen, zu minimieren, sind die Reflektoren bevorzugt so ausgebildet, dass sie einerseits den gesamten Querschnitt des Strömungskanals ausfüllen, dass aber Strömungsöffnungen verstärkt in Randbereichen und in Totschallbereichen der auf die Reflektoren auftreffenden Schallkeulen der Ultraschallwandler angeordnet sind.

In der Mitte, welche üblicherweise den Kernbereich darstellt, benötigt man nur sehr kleine Öffnungen. Mit den zusätzlichen Strömungsöffnungen in Rand- und Totschallbereichen lässt sich mit einer hohen Annäherung ein Zustand erreichen, bei dem ohne Querströmungskomponenten die Flüssigkeit vom einen Reflektor bis zum anderen Reflektor gleichmäßig stark verläuft, so dass die gesamte Messstrecke zwischen diesen Reflektoren optimal ausgenutzt ist. Die Strömungsöffnungen, die i. w. zylindrische Kanäle, aber auch langgestreckte Schlitze sein können, können dabei in weiterer Ausgestaltung der Erfindung im Bereich von senkrecht zur Strömungsrichtung verlaufenden Stufen der Reflektoren angeordnet sein. Durch diese Ausbildung der Öffnungen in im Wesentlichen senkrecht zur Längsachse der Messstrecke angeordneten Stufenflächen wird die Reflexionsfläche des Reflektors für die Schallwellen überhaupt nicht unterbrochen, da das Ende der oben liegenden Schrägfläche mit dem Anfang der darunter liegenden Schrägfläche zusammenfällt und somit die Strömungsöffnungen für die von den Ultraschallwandlern kommenden Schallwellen quasi unsichtbar sind.

Neben der angesprochenen Ausbildung der Strömungsöffnungen speziell in den Randbereichen oder Totschallbereichen kann aber umgekehrt auch eine Anordnung der Strömungsöffnungen derart vorgesehen sein, dass sie - unmittelbar in der Mitte der Ultraschallkeule liegend - die Schallkeule der Ultraschallwandler durch gezielte Verluste in Richtung einer Rechteckfunktion verzerren. Prinzipiell sendet nämlich ein Kolbenschwinger bezüglich seiner Hauptkeule eine parabelähnliche Schallkeule aus. Die Forderung für die Schallkeule für die ideale Laufzeitdifferenzmessung ist aber eine Rechteckfunktion. Mit den Öffnungen im Reflexionselement kann man nun gezielte Schallverluste so einbauen, dass die reflektierte Welle einer Rechteckwelle nahekommt.

Durch die erfindungsgemäße Ausgestaltung eines Ultraschallzählers mit Strömungsöffnungen in den Reflektoren ergibt sich ein derartiger Strömungsverlauf, dass keine Strömungsabschnitte entstehen, die undefinierte Strömungsverläufe beinhalten. Man verliert zwar auf der anderen Seite durch die Strömungsöffnungen Schallanteile, die sich als erhöhte Dämpfung des Empfangssignals auswirken. Bleiben diese Dämpfungsverluste aber in einem vertretbaren Rahmen, was in der Praxis problemlos möglich ist, ergibt sich daraus keine Erhöhung der Messunsicherheit. Bei der Dimensionierung der Öffnungen derart, dass man die Rand-und Totschallbereiche mit größeren Öffnungen versieht als den Kernbereich, brauchen die Strömungsöffnungen im Kernbereich nur sehr klein ausgebildet zu sein. Diese dienen dabei in erster Linie dazu, Haftströmungen, die an der schräg liegenden Platte auftreten, zu unterbinden. Die durch die Strömungsöffnungen gebildeten Strömungsdüsen wirken als Freistrahler und richten die Strömung gleich.

Die erfindungsgemäße Ausbildung hat eine Reihe von Vorteilen. Zum einen ist keine Strömungsumlenkung erforderlich und zum anderen reduzieren sich die Totwasserräume mit induzierten Sekundärströmungen auf die Wandlermulde. Das Gehäuse kann gegenüber den mit rechteckigen Zu- und Abläufen im Bereich der einander gegenüberstehenden Wandler ausgebildeten Konstruktionen sehr viel einfacher gestaltet werden. Der die eigentlichen Messeffekte der Ultraschalllaufzeit erzeugende Strömungsabschnitt beginnt direkt an der Reflexionsebene, wodurch sich eine sehr kompakte Bauweise ergibt.

Darüber hinaus gibt die erfindungsgemäße Ausbildung auch noch die Möglichkeit durch die besondere Gestaltung der Strömungsöffnungen Störungen des Strömungsprofils in der Reflexionsebene zusätzlich zu bereinigen. Zu diesem Zweck können die Strömungsöffnungen mit Strömungsabrisskanten versehen sein, beispielsweise dadurch, dass man die Enden der Öffnungen auf der Reflexionsseite erweitert, wobei der Effekt noch weiter verbessert werden kann, wenn man die Strömungsöffnungen konisch zulaufend ausbildet.

Schließlich liegt es auch noch im Rahmen der Erfindung die Neigung der Reflektorabschnitte derart unterschiedlich zu wählen, dass die einzelnen von den Abschnitten reflektierten Teilschallbündel zur Strömungsrichtung geneigt reflektiert werden und auf im Querschnitt der Messstrecke versetzte Reflektorabschnitte auftreffen. Dadurch ergibt sich eine Schallführung, bei der das Gleichheitsprinzip für die Schallausbreitung in und gegen die Strömungsrichtung wesentlich verbessert und symmetrisiert wird, so dass Signalstörungen, die durch induzierte Sekundärströmungen in den Totwasserbereichen entstehen, kompensiert werden. Diese unterschiedliche Ausbildung der Neigung einzelner Reflektorabschnitte wird dabei bevorzugt wiederum mit der bereits angesprochenen Konstruktion kombiniert, bei der die Strömungsöffnungen im Bereich von senkrecht zur Strömungsrichtung verlaufenden Stufen also zwischen zwei unterschiedlich geneigten Reflektorabschnitten angeordnet sind.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: eine schematische Ansicht eines bekannten Ultraschallzählers mit einander gegenüberstehenden Wandlern und Strömungsumlenkung vor diesen Wandlern,
- Fig. 2: eine schematische Ansicht eines Ultraschallzählers bei dem die Ultraschallstrahlung der seitlich neben der Messstrecke angeordneten Ultraschallzähler durch im Strömungskanal angeordnete Reflektoren umgelenkt wird,
- Fig. 3: einen vergrößerten Teilschnitt durch die eine Hälfte eines entsprechend Fig. 2 ausgebildeten Ultraschallzählers mit erfindungsgemäß ausgebildeten mit Strömungsöffnungen versehenen Reflektoren,
- Fig. 4: einen erfindungsgemäßen Ultraschallzähler bei dem die Reflektoren unterschiedlich geneigte Reflektorabschnitte aufweisen, um in beide Laufrichtungen möglichst symmetrische Ultraschalllaufzeiten zu erreichen,
- Fig. 5: einen vergrößerten Ausschnitt eines gestuften Reflektorabschnitts entsprechend dem Ausschnitt in Fig. 5 in Fig. 4 zur Bildung von Strömungsabrisskanten und
- Fig. 6: eine schematische Darstellung der Verzerrung der Ultraschallkeulen im Bereich von Strömungsöffnungen zur Erzielung einer möglichst rechteckförmigen Schallabstrahlungscharakteristik im Bereich der Messstrecke.

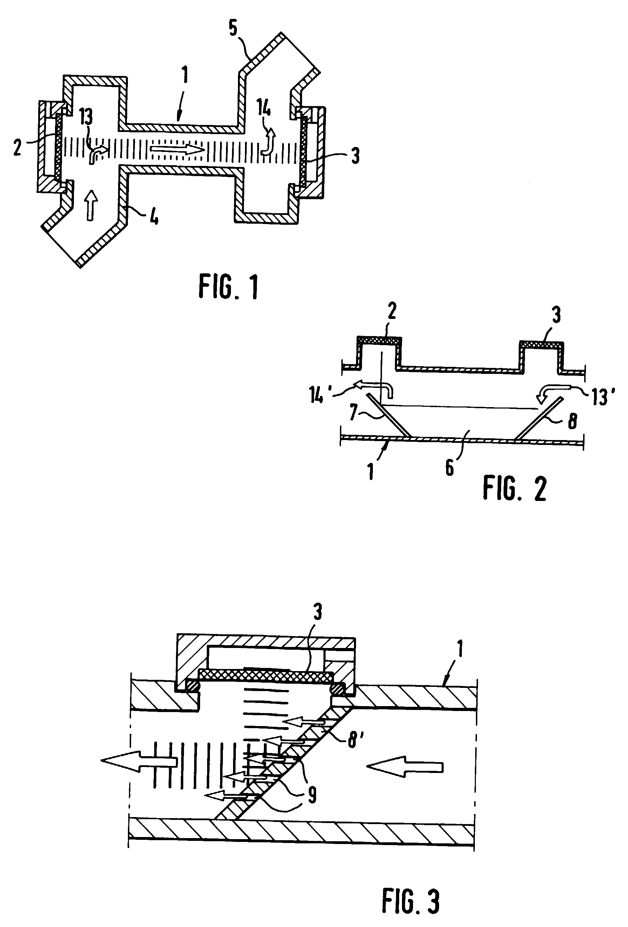

Die Fig. 1 und 2 zeigen den grundsätzlichen Aufbau bekannter Ultraschallzähler. In Fig. 1 ist dabei ein typischer Ultraschallzähler gezeichnet, bei dem das Gehäuse 1 mit den beiden einander gegenüberliegenden Ultraschallwandlern 2 und 3 mit abgewinkelten Zufluss- und Abflussstutzen 4 und 5 versehen ist. Im Einlaufbereich 13 und Auslaufbereich 14 entstehen dabei Querströmungen und Wirbel die nicht mehr parallel zur Schallwellenausbreitung in der Verbindungsrichtung der Ultraschallwandler 2 und 3 strömen.

Bei dem Aufbauschema eines Ultraschallzählers gemäß Fig. 2 sind die Ultraschallwandler 2 und 3 seitlich neben der eigentlichen Messstrecke 6 des Gehäuses 1 angeordnet. Die Schallein- und -ausstrahlung erfolgt im Wesentlichen senkrecht zur Achse der Messstrecke 6, wobei Reflektoren 7 und 8 für die notwendige Umlenkung der Ultraschallstrahlung parallel zur Strömungsrichtung sorgen. Auch hier entstehen durch die schräg stehenden Reflektoren 7 und 8 Störungen des Strömungsprofils 13', 14', insbesondere durch die Anhaftung der Strömung am Reflektor durch den sogenannten Coanda-Effekt mit schwer beherrschbarem Wirbelabriss.

Erfindungsgemäß ist bei einem Ultraschallzähler mit dem Aufbauprinzip gemäß Fig. 2 - wie dies in den Ausführungsbeispielen nach den Fig. 3 bis 6 im Einzelnen dargestellt ist - eine besondere Ausbildung der Reflektoren 7', 8' bzw. 7'', 8'' vorgesehen, wobei in den i. w. den gesamten Querschnitt des Messgehäuses 1 durchsetzenden Reflektoren Strömungsöffnungen 9, 9', 9'' ausgebildet sind. Diese Strömungsöffnungen zum direkten Durchleiten der Flüssigkeit in die Messstrecke 6 zwischen den Reflektoren 7', 8' bzw. 7'', 8'' haben eine Reihe von Vorteilen. So ist zum einen keine Strömungsumlenkung erforderlich und Totwasserräume mit induzierten Sekundärströmungen reduzieren sich auf die Wandlermulde. Man hat eine einfache Konstruktion des Gehäuses ohne die seitlichen Zu- und Ablaufstutzen wie bei dem Ultraschallzähler gemäß Fig. 1. Durch die Gestaltung der Öffnungen können Störungen des Strömungsprofils zusätzlich bereinigt werden. Der die eigentlichen Messeffekte erzeugende Strömungsabschnitt also der Bereich in der Messstrecke 6 beginnt direkt an den Reflexionsebenen woraus eine sehr kompakte Bauweise resultiert.

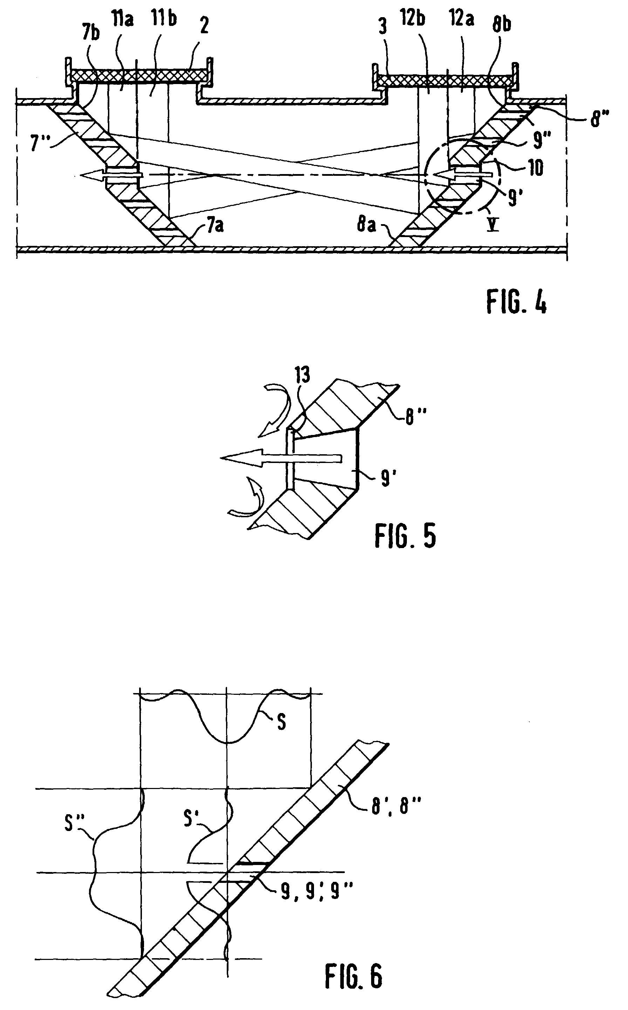

Während bei dem einfachsten Ausführungsbeispiel nach Fig. 3 die als runde zylindrische Bohrungen oder auch als Schlitze ausgebildeten Strömungsöffnungen 9 im Wesentlichen gleichmäßig groß ausgebildet und gleichmäßig verteilt angeordnet sind, wird man in der Praxis mehr dazu neigen die Öffnungen so zu verteilen, dass sie in Rand- und Totschallbereichen größer oder zahlreicher sind als im Kernbereich der auf die Reflektoren auftreffenden Schallkeulen. Dies ist in den Figuren aber nicht dargestellt, da je nach der Art der Wandler und der Ausbildung der Schallkeulen die Anordnung insoweit unterschiedlich ausgebildet sein kann. Dabei kann auch vorgesehen sein, dass die Öffnungen 9 jeweils im Bereich von Stufen der Reflektoren liegen, also im Bereich der senkrecht zur Längsachse des Gehäuses 1 verlaufenden Wandungen dieser Stufen (wie etwa bei der Strömungsöffnungen 9' in Fig. 4). Auf diese Art und Weise grenzen von der Seite her gesehen die Enden benachbarter Abschnitte der Reflektoren direkt aneinander an, so dass überhaupt kein Schallverlust durch die Strömungsdurchtrittsöffnungen beim Auftreffen der Schallkeule vom Wandler eintritt.

Beim Ausführungsbeispiel nach Fig. 4 handelt es sich um eine Variante bei der die Reflektoren 7'' und 8'' in zwei unterschiedlich geneigte Abschnitte derart unterteilt sind, dass jeweils von einem Reflektorabschnitt die Teilschallkeulen 11a, 11b bzw. 12a, 12b auf den jeweils anderen Reflektorabschnitt gelenkt werden, wie dies im Einzelnen eingezeichnet ist. Dadurch, dass das Bündel, welches oberhalb des Freistrahls reflektiert wird auf den zweiten Reflektor unten auftritt und umgekehrt, ergibt sich der Vorteil, dass das Gleichheitsprinzip für die Schallausbreitung in und gegen die Strömungsrichtung wesentlich verbessert wird und somit die Signalstörungen, die durch induzierte Sekundärströmungen in den Totwasserbereichen entstehen, kompensiert werden. Hierbei ist es auch möglich, nur die Öffnung 9' als Strömungsdurchtritt auszubilden.

In allen Fällen kann, wie in Fig. 5 angedeutet ist, die jeweilige Strömungsöffnung 9, 9', 9'' im Strömungsaustrittsbereich mit einer eine Strömungsabrisskante bildenden Fase 13 versehen sein. Die dadurch gebildete Strömungsabrisskante bewirkt, dass der aus dem Spalt austretende Freistrahl durch die schräg ausgebildete Fläche des Reflexionselements nicht abgelenkt wird. Diesen Effekt kann man noch dadurch verstärken, dass man die Strömungsöffnung 9' wie in Fig. 5 gezeigt konisch ausbildet.

Abgesehen von dem einen Grundprinzip der Anordnung der Strömungsdurchtrittsöffnungen 9, 9', 9'' derart, dass sie in Rand- und Totschallbereichen zahlreicher oder mit größeren Öffnungsweiten angeordnet sind als im Kernbereich, wobei man im Kernbereich ja nur sehr kleine Öffnungen braucht die dazu dienen, die Haftströmungen die an den schräg stehenden Reflektoren auftreten zu unterbinden, kann man die Anordnung und Verteilung der Strömungsdurchtrittsöffnungen auch speziell dahingehend optimieren, dass durch die Strömungsdurchtrittsöffnungen 9, 9' oder 9'' - wie dies in Fig. 6 angedeutet ist - gezielte Schallverluste erzielt werden, um ausgehend von den üblichen Ultraschallhauptkeulen eines Kolbenschwingers mit parabelähnlicher Schallkeule der Forderung für die ideale Laufzeitmessung nach einer mehr rechteckigen Funktion der Schallkeule eher entsprechen zu können. Durch den eingebauten Schallverlust durch die in diesem Fall nicht im Bereich einer Stufe angeordnete Strömungsöffnung 9, 9', 9'' gemäß Fig. 6 ergibt sich ein Schallverlust des abgestrahlten Schalls S in der Mitte der parabelähnlichen Schallkeule die zu der mehr rechteckförmigen Verteilung S'' führt. S' ist der reflektierte Schall in der Reflexionsebene.

Die Erfindung ist nicht auf die dargestellten Ausführungsbeispiele beschränkt. Wie bereits ausgeführt, kann die Ausbildung der Strömungsöffnungen 9, 9', 9'' und ihre Verteilung über die Reflektoren in unterschiedlichster Weise erfolgen je nachdem welche speziellen Vorteile man mit ihrer Hilfe besonders ansprechen und verstärken möchte.

## Patentansprüche

1. Ultraschallzähler zur Bestimmung des Strömungsvolumens einer strömenden Flüssigkeit durch eine Laufzeitmessung, insbesondere Differenzlaufzeitmessung, eines Ultraschallsignals, das in einer Messstrecke eines Strömungskanals zwischen zwei vorzugsweise umschaltbaren Ultraschallwandlern verläuft, die seitlich neben dem Strömungskanal der Messstrecke angeordnet sind, wobei die i. w. senkrecht zur Achse der Messstrecke eingekoppelte Ultrschall-Strahlung über Reflektoren i. w. parallel zur Achse der Messstrecke umgelenkt wird, dadurch gekennzeichnet, dass die Reflektoren (7', 8'; 7'', 8'') mit einer oder mehreren Strömungs-Öffnungen (9, 9', 9'') zum direkten Durchleiten der Flüssigkeit in die Messstrecke (6) zwischen den Reflektoren versehen sind.

2. Ultraschallzähler nach Anspruch 1, dadurch gekennzeichnet, dass die Strömungsöffnungen (9, 9', 9'') verstärkt in Rand- und Totschallbereichen der auf die Reflektoren (7', 8'; 7'', 8'') auftreffenden Schallkeulen der Ultraschallwandler (2, 3) angeordnet sind.

3. Ultraschallzähler nach Anspruch 1 oder 2, dadurch gekennzeichnet, dass die Strömungsöffnungen derart angeordnet sind, dass sie die Schallkeule der Ultraschallwandler durch gezielte Verluste in Richtung einer Rechteckfunktion verzerren.

4. Ultraschallzähler nach einem der Ansprüche 1 bis 3, dadurch gekennzeichnet, dass die Strömungsöffnungen (9, 9', 9'') i. w. zylindrische Kanäle sind.

5. Ultraschallzähler nach einem der Ansprüche 1 bis 3, dadurch gekennzeichnet, dass die Strömungsöffnungen (9, 9', 9'') i. w. schlitzförmig ausgebildet sind.

6. Ultraschallzähler nach einem der Ansprüche 1 bis 5, dadurch gekennzeichnet, dass die Strömungsöffnungen (9') im Bereich von senkrecht zur Strömungsrichtung verlaufenden Stufen (10) der Reflektoren (8'') angeordnet sind.

7. Ultraschallzähler nach Anspruch 6, dadurch gekennzeichnet, dass die Neigung der Reflektorabschnitte (7a, 7b, 8a, 8b) derart unterschiedlich gewählt ist, dass die einzelnen Teilschallbündel (11a, 11b, 12a, 12b) zur Strömungsrichtung geneigt reflektiert werden und auf im Querschnitt der Messstrecke versetzte Reflektorabschnitte auftreffen.

8. Ultraschallzähler nach einem der Ansprüche 1 bis 7, dadurch gekennzeichnet, dass die Strömungsöffnungen (9') mit Strömungsabrisskanten versehen sind.

9. Ultraschallzähler nach Anspruch 8, dadurch gekennzeichnet, dass die Strömungsöffnungen (9') im Austrittsbereich, vorzugsweise konisch, erweitert sind.
